# EUROPEAN PATENT APPLICATION

(11) **EP 4 016 450 A1**
(43) Date of publication of application: **22.06.2022**
(21) Application number: 20900979.4
(22) Date of filing: 19.11.2020
(51) Int. Cl.: G06T 7/00

(54) **STATE DETERMINATION DEVICE AND STATE DETERMINATION METHOD**

(30) Priority: 16.12.2019 JP 2019226470
(71) Applicant: Hitachi, Ltd., Tokyo 100-8280 (JP)
(72) Inventor: KITAMURA, Shogo, Tokyo 100-8280 (JP); NONAKA, Yuichi, Tokyo 100-8280 (JP)
(74) Representative: Manitz Finsterwald Patent- und Rechtsanwaltspartnerschaft mbB
(86) International application number: PCT/JP2020/043274
(87) International publication number: WO 2021/124791

(57) **Abstract**

The present invention improves accuracy in determining the state of a subject in an image with a background captured therein.

An image reconfiguration unit 1 reconfigures a captured image and outputs the reconfigured image. A mask generation unit 2 uses the reconfigured image as an input, separates a subject and the background in the captured image, and outputs a generated mask showing a subject area in the captured image. A color determination unit 3A determines the state of the color of the subject on the basis of a comparison result between pixel values of the captured image and the reconfigured image. A shape determination unit 4 determines the state of the shape of the subject on the basis of the generated mask outputted by the mask generation unit 2 and a template mask relating to the shape of the subject in a normal state. An integrated determination unit 5 uses a color determination result outputted by the color determination unit 3A and a shape determination result outputted by the shape determination unit 4, and outputs an integrated determination result obtained through integration of said results.

## Description

### [Technical Field]

The present invention relates to a state determination apparatus and a state determination method using image processing.

### [Background Art]

As an abnormality determination technology using image processing, a technology disclosed in PTL 1 has been known. PTL 1 describes the technology including: "an analysis unit that calculates parameters representing the properties of image data of a subject including no abnormality through dimensional compression for reducing the dimensions of the data on the image data of the subject including no abnormality, and that performs dimensional compression on image data of a subject to be inspected using the parameters; a restoration unit that generates restored data obtained by restoring the image data of the subject to be inspected having been subjected to the dimensional compression by the analysis unit; a correction unit that generates, using a filter for correcting an error between the restored data restored by the restoration unit and the image data of the subject to be inspected, restored data corrected by filtering the restored data; a determination unit that outputs a determination result showing whether the subject to be inspected has abnormality on the basis of the magnitude of a difference for each pixel between the image data of the subject to be inspected and the corrected restored data; and an output unit that outputs the determination result outputted by the determination unit".

### [Citation List]

### [Patent Literature]

[PTL 1]
Japanese Patent No. 6241576

### [Summary of Invention]

### [Technical Problem]

The abnormality determination technology using image processing is mainly applied to, for example, facility inspection systems used to inspect facilities such as road signs or appearance inspection system used to inspect the appearance of products in factory production lines.

However, when a background is reflected instead of a subject in a lacked area of the lacked subject (in a scene in which the subject is provided), there is a possibility that a difference for each pixel between the image data of the subject and restored data cannot be obtained. This is because the background is information that can be included in all the image data regardless of the presence or absence of abnormality, information on the background is included in parameters representing the properties of the image data of a subject having no abnormality, and the restored data of the lacked subject may be generated. Accordingly, there is room for an improvement in performing the state determination of the lacked subject.

The present invention has been made in view of the above circumstances and has an object of providing a state determination apparatus and a state determination method capable of improving accuracy in determining the state of a subject in an image with a background captured therein.

### [Solution to Problem]

In order to achieve the above object, a state determination apparatus according to a first aspect includes: a mask generation unit; and a shape determination unit, wherein the mask generation unit is configured to generate a generated mask that separates a subject and a background included in an image, and the shape determination unit is configured to determine a state of a shape of the subject on the basis of the generated mask generated by the mask generation unit and a template mask relating to a shape of the subject in a normal state.

### [Advantageous Effects of Invention]

According to the present invention, accuracy in determining the state of a subject in an image with a background captured therein can be improved.

### [Brief Description of Drawings]

[Fig. 1]

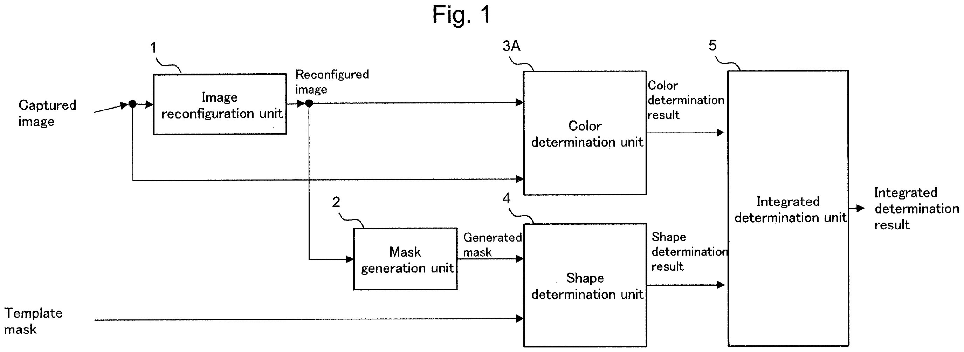

   Fig. 1 is a block diagram showing the configuration of a state determination apparatus according to a first embodiment.
[Fig. 2]

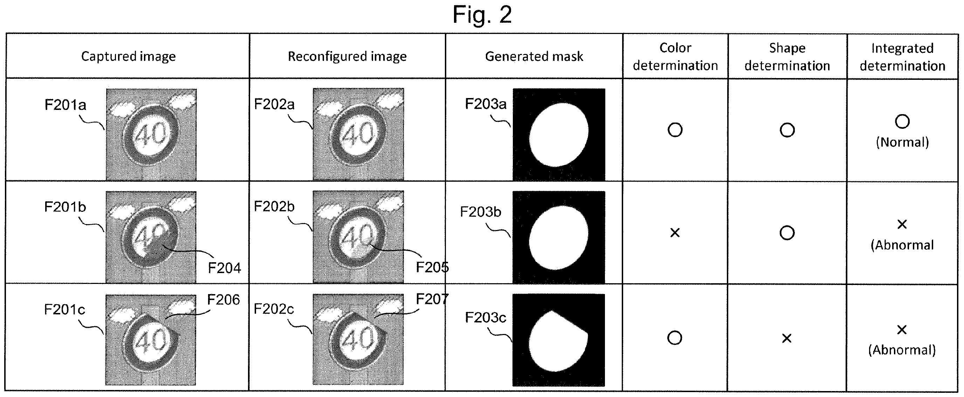

   Fig. 2 is a diagram showing examples of various images and state determination processes used in the state determination apparatus of Fig. 1.
[Fig. 3]

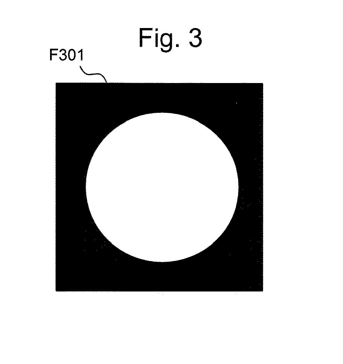

   Fig. 3 is a diagram showing an example of a template mask used in the state determination apparatus of Fig. 1.
[Fig. 4]

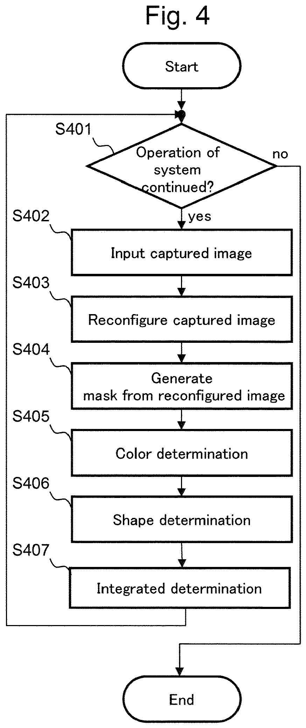

   Fig. 4 is a flowchart showing state determination processing by the state determination apparatus of Fig. 1.
[Fig. 5]

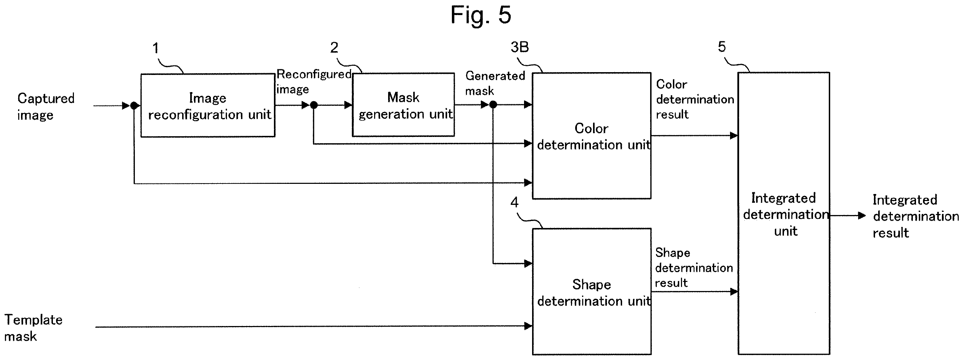

   Fig. 5 is a block diagram showing the configuration of a state determination apparatus according to a second embodiment.
[Fig. 6]

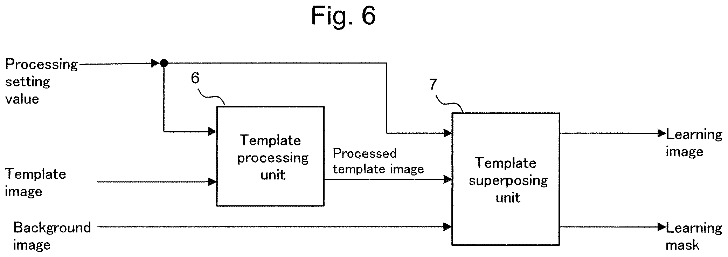

   Fig. 6 is a block diagram showing a configuration example for generating a learning data set of the image reconfiguration unit and the mask generation unit of a state determination apparatus according to a third embodiment.
[Fig. 7A]

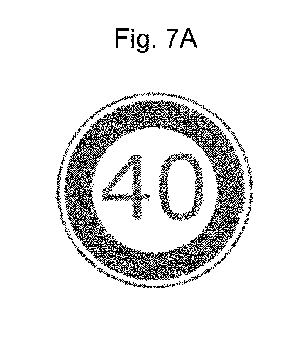

   Fig. 7A is a diagram showing an example of a template image of Fig. 6.
[Fig. 7B]

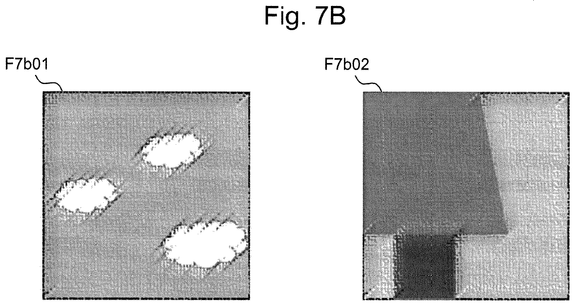

   Fig. 7B is a diagram showing an example of a background image of Fig. 6.
[Fig. 7C]

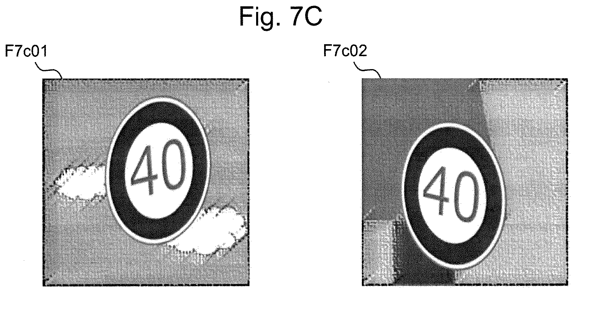

   Fig. 7C is a diagram showing an example of a learning image of Fig. 6.
[Fig. 7D]

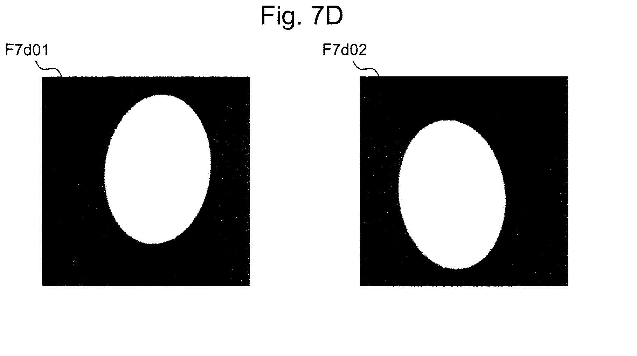

   Fig. 7D is a diagram showing an example of a learning mask of Fig. 6.
[Fig. 8]

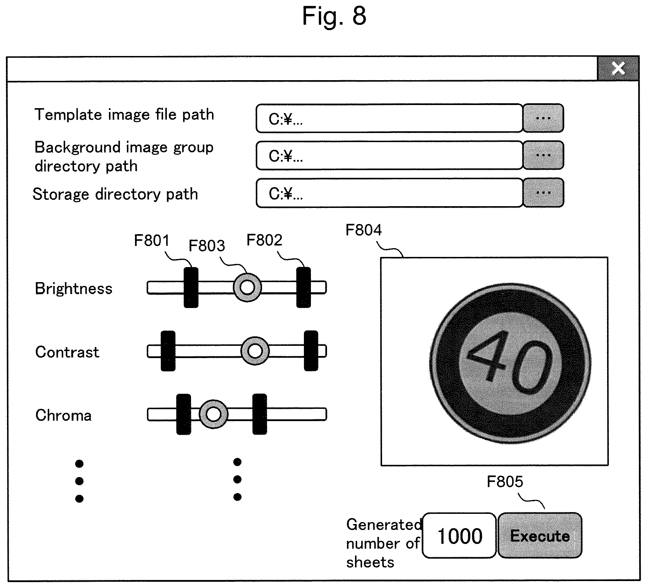

   Fig. 8 is a diagram showing an example of a GUI used to process a template image and superpose the processed template image on a background image of the state determination apparatus according to the third embodiment.
[Fig. 9]

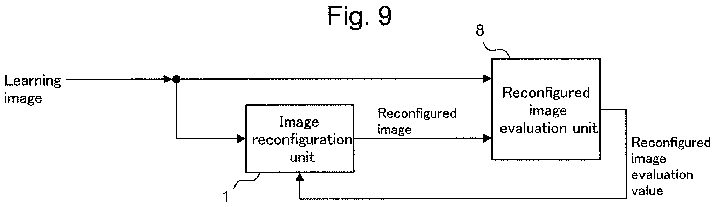

   Fig. 9 is a diagram showing the configuration of the image reconfiguration unit during learning of the state determination apparatus according to the third embodiment.
[Fig. 10]

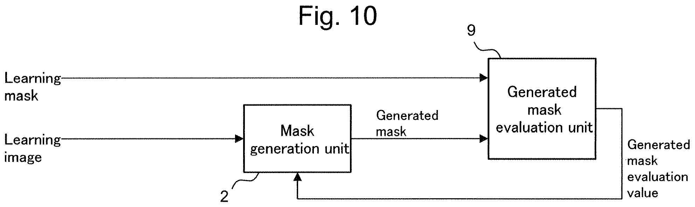

   Fig. 10 is a diagram showing the configuration of the mask generation unit during learning of the state determination apparatus according to the third embodiment.
[Fig. 11]

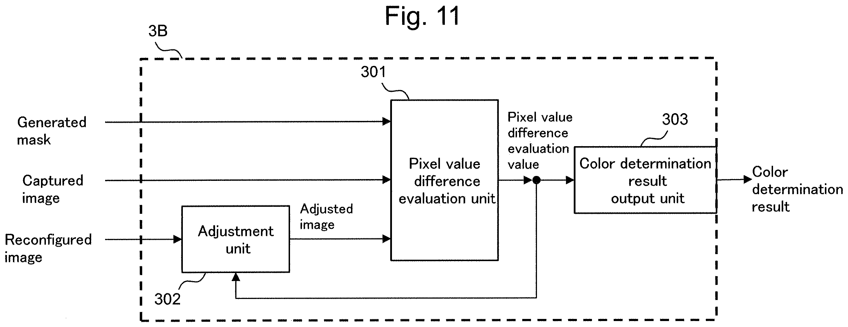

   Fig. 11 is a block diagram showing a configuration example of the color determination unit of a state determination apparatus according to a fourth embodiment.
[Fig. 12]

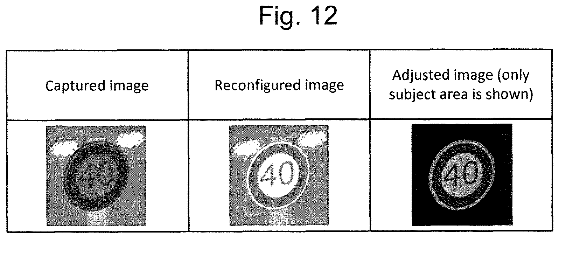

   Fig. 12 is a diagram showing an adjustment example of the adjustment unit of Fig. 11.
[Fig. 13]

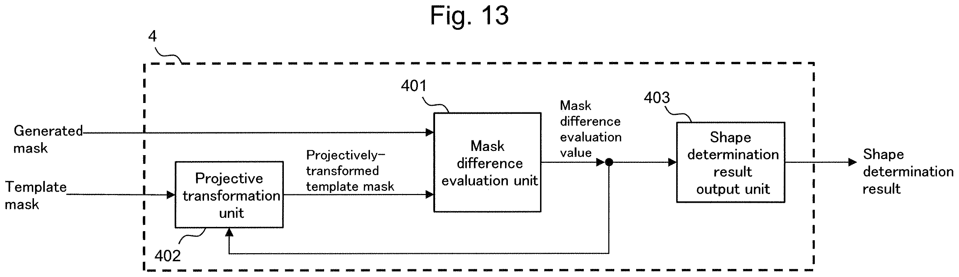

   Fig. 13 is a block diagram showing the configuration of the shape determination unit of a state determination apparatus according to a fifth embodiment.
[Fig. 14]

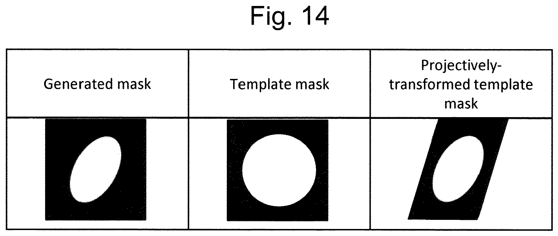

   Fig. 14 is a diagram showing a projective transformation example of the projective transformation unit of Fig. 13.
[Fig. 15]

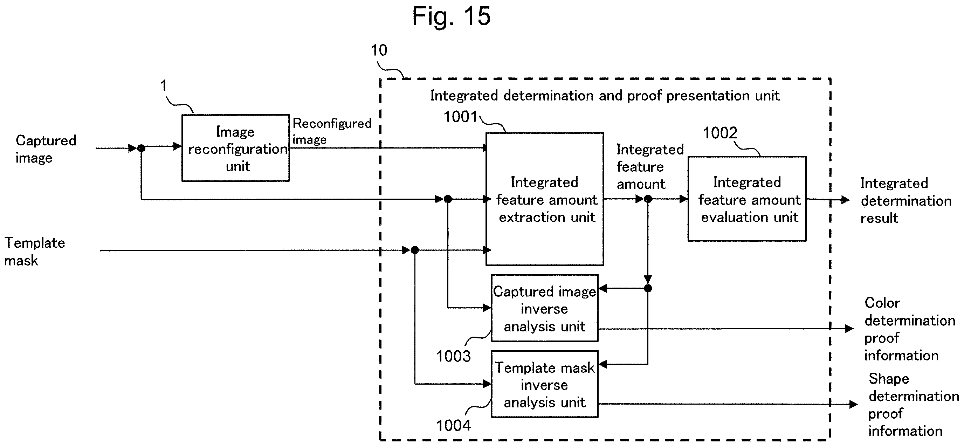

   Fig. 15 is a block diagram showing the configuration of a state determination apparatus according to a sixth embodiment.

### [Description of Embodiments]

Embodiments will be described with reference to the drawings. Note that the following embodiments do not intend to limit the invention according to claims and various elements and all their combinations described in the embodiments are not necessarily required for the solution of the invention.

Fig. 1 is a block diagram showing the configuration of a state determination apparatus according to a first embodiment. In Fig. 1, the state determination apparatus includes an image reconfiguration unit 1, a mask generation unit 2, a color determination unit 3A, a shape determination unit 4, and an integrated determination unit 5. Note that a captured image in which a subject is reflected may be inputted from a camera or data stored in a storage as an image file may be used as such in the configuration shown in Fig. 1.

The image reconfiguration unit 1 reconfigures a captured image and outputs a reconfigured image. Here, using a captured image group in which a subject in a normal state having no abnormality is reflected, the image reconfiguration unit 1 can be caused to perform learning in advance to reconfigure an original image after compressing the dimensions of the captured image in which the subject in the normal state is reflected. As a method for reconfiguring an image, architecture such as principal component analysis, AutoEncoder using a DNN (Deep Neural Network), and a GAN (Generative Adversarial Network) may be used. The method for reconfiguring the image is not limited to these methods.

The image reconfiguration unit 1 can reconfigure a reconfigured image of which the dimensions are compressed while leaving the features of a subject in a normal state, and can output the reconfigured image in which the subject in the normal state is reflected while reducing fluctuations in a captured image due to a difference in capturing conditions or the like.

The mask generation unit 2 uses a reconfigured image as an input, separates a subject and a background in a captured image, and outputs a generated mask showing a subject area in the captured image. As a method for generating the generated mask, a method in which a prescribed threshold is applied to pixel values or a method such as semantic segmentation using a DNN may be used. The method for generating the generated mask is not limited to these methods. The generated mask may be a binary image or a gray scale image.

The color determination unit 3A determines the state of the color of a subject on the basis of a comparison result between pixel values of a captured image and a reconfigured image, and outputs the color determination result of the subject. For example, the color determination unit 3A determines that the subject is normal when a difference between the pixel values is small or determines that the subject is abnormal when the difference is large. The color determination result may be expressed by the two values of normality and abnormality or a continuous value based on the difference between the pixel values.

The shape determination unit 4 determines the state of the shape of a subject on the basis of a generated mask outputted by the mask generation unit 2 and a template mask relating to the shape of the subject in a normal state, and outputs the shape determination result of the subject. Since the shape of a target facility in a normal state is known, the template mask showing the shape of the subject in the normal state can be prepared in advance. Then, the shape determination unit 4 evaluates similarity between the generated mask and the template mask, and outputs a shape determination result. As an index showing the similarity between the shapes, IoU (Intersection over Union) may be, for example, used. The shape determination result may be expressed by the two values of normality and abnormality or a continuous value based on the similarity.

The integrated determination unit 5 outputs, using a color determination result outputted by the color determination unit 3A and a shape determination result outputted by the shape determination unit 4, an integrated determination result obtained through the integration of the results. Here, when the color determination result and the shape determination result are expressed by the two values of normality and abnormality, the abnormality may be outputted as the integrated determination result in a case in which any of the color determination result and the shape determination result is abnormal. Further, when the color determination result and the shape determination result are continuous values, the values may be weighted and summed up according to need and the abnormality may be outputted in a case in which the summed value exceeds a prescribed threshold. Further, the summed value may be outputted as it is. Further, in order to make a determination reason definite for a user, the color determination result and the shape determination result may be outputted to an outside together with the integrated determination result.

Here, the shape determination unit 4 can determine the state of the shape of a subject on the basis of a template mask relating to the shape of the subject in a normal state. Therefore, even in a case in which the image reconfiguration unit 1 and the mask generation unit 2 are configured using deep learning, an image of a subject in a normal state is only required to be prepared, and an image of the subject in a rare abnormal state is not required to be obtained. As a result, accuracy in determining the state of the subject can be improved without preparing a large amount of learning images that are not easily available.

Fig. 2 is a diagram showing examples of various images and state determination processes used in the state determination apparatus of Fig. 1, and Fig. 3 is a diagram showing an example of a template mask used in the state determination apparatus of Fig. 1. In Fig. 2, a first row shows a state determination process in a case in which a captured image F201a with a normal subject is inputted, a second row shows a state determination process in a case in which a captured image F201b with the subject stained is inputted, and a third row shows a state determination process in a case in which a captured image F201c with the subject partially lacked is inputted. Note that the example of Fig. 2 shows the cases in which the subject is a road sign and a background is the sky. At this time, a template mask F301 relating to the shape of the subject in a normal state is inputted to the shape determination unit 4 of Fig. 1 as shown in Fig. 3.

Referring back to Fig. 2, in the case of the captured image F201a with the normal subject, the image reconfiguration unit 1 outputs a reconfigured image F202a corresponding to the normal captured image F201a since the image reconfiguration unit 1 has performed learning on the basis of an image of the normal subject. Therefore, the color determination unit 3A determines that a difference between pixel values of the captured image F201a and the reconfigured image F202a is small. Further, the mask generation unit 2 outputs a generated mask F203a corresponding to the shape of the normal subject since the mask generation unit 2 has performed learning on the basis of the shape of the normal subject. Therefore, the shape determination unit 4 determines that similarity between the generated mask F203a and the template mask F301 is high.

Accordingly, the color determination unit 3A outputs normality as a color determination result, the shape determination unit 4 outputs normality as a shape determination result, and the integrated determination unit 5 outputs normality as an integrated determination result.

On the other hand, in the case of the captured image F201b with the stained subject, the image reconfiguration unit 1 cannot suitably reconfigure a stained area F204 since the image reconfiguration unit 1 has performed learning on the basis of the image of the normal subject having no stain. Therefore, a difference is caused between pixel values of the stained area F204 of the captured image F201 and a stained area F205 of a reconfigured image F202b, and the color determination unit 3A determines that the difference between the pixel values of the captured image F201b and the reconfigured image F202b is large. Further, the mask generation unit 2 outputs a generated mask F203b corresponding to the shape of the normal subject since the mask generation unit 2 has performed learning on the basis of the shape of the normal subject. Therefore, the shape determination unit 4 determines that similarity between the generated mask F203b and the template mask F301 is high. Accordingly, the color determination unit 3A outputs abnormality as a color determination result, the shape determination unit 4 outputs normality as a shape determination unit, and the integrated determination unit 5 outputs abnormality as an integrated determination result since one of the color and the shape is abnormal.

Further, in the case of the captured image F201c with the subject partially lacked, the background is reflected in a lacked area F206 instead of the subject. Since the background is also included in a normal image group having been used by the image reconfiguration unit 1 for learning, the image reconfiguration unit 1 reconfigures the background like the captured image F201c in a lacked area F207 of a reconfigured image F202c. Therefore, the color determination unit 3A determines that a difference between pixel values of the captured image F201c and the reconfigured image F202c is small. Further, the mask generation unit 2 outputs a generated mask F203c corresponding to the shape of the subject in which the lacked area F206 of the captured image F201c is reflected. On the other hand, the template mask F301 reflects the shape of the subject in the normal state (a circle having no lack in the example of Fig. 3). Therefore, the shape determination unit 4 determines that similarity between the generated mask F203c and the template mask F301 is low. Accordingly, the color determination unit 3A outputs normality as a color determination unit, the shape determination unit 4 outputs abnormality as a shape determination result, and the integrated determination unit 5 outputs abnormality as an integrated determination result since one of the color and the shape is abnormal.

Fig. 4 is a flowchart showing state determination processing by the state determination apparatus of Fig. 1.

In Fig. 4, the state determination apparatus transitions into a processing loop after activation and monitors whether a command for completing an operation has been issued in the processing loop in step S401. When the operation is continued, the image reconfiguration unit 1 and the color determination unit 3A of Fig. 1 capture a subject or read a captured image file and input a captured image in step S402. In step S403, the image reconfiguration unit 1 reconfigures the captured image and outputs a reconfigured image.

In step S404, the mask generation unit 2 receives the reconfigured image and outputs a generated mask showing a subject area in the captured image. In step S405, the color determination unit 3A determines the state of the color of the subject and outputs a color determination result through a comparison between pixel values of the captured image and the reconfigured image. In step S406, the shape determination unit 4 determines the state of the shape of the subject and outputs a shape determination result on the basis of the generated mask and a template mask relating to the shape of the subject. In step S407, the integrated determination unit 5 outputs an integrated determination result using the color determination result and the shape determination result.

As described above, it is possible to, using a feature that an abnormal state possibly caused in a subject is broken down into the two elements of a color and a shape, determine a state in a different way for each of the color and the shape on the basis of a captured image of the subject and a reconfigured image obtained when the image reconfiguration unit having performed learning using an image of the subject in a normal state reconfigures the captured image and determine the state of the subject through the integration of respective results according to the above first embodiment.

Fig. 5 is a block diagram showing the configuration of a state determination apparatus according to a second embodiment.

In the configuration of Fig. 5, a color determination unit 3B is provided instead of the color determination unit 3A of Fig. 1. The color determination unit 3B receives a generated mask outputted by a mask generation unit 2, besides an input received by the color determination unit 3A.

The color determination unit 3B extracts subject areas from a captured image and a reconfigured image on the basis of a generated mask, and determines the state of the color of a subject on the basis of a comparison result between pixel values of the subject areas of the captured image and the reconfigured image.

Thus, the color determination unit 3B can exclude a background area from an area in which a difference between pixel values is calculated, and limit the area in which the difference between the pixels is calculated to a subject area. Therefore, it is possible to reduce an erroneous determination due to a reconfiguration error between the background areas of a captured image and a reconfiguration image when the state of a subject is normal.

As described above, it is possible to determine the state of the color of a subject area in a captured image, output a color determination result, and perform a state determination through the input of a generated mask outputted by the mask generation unit 2 to the color determination unit 3B according to the above second embodiment.

Fig. 6 is a block diagram showing a configuration example for generating a learning data set of the image reconfiguration unit and the mask generation unit of a state determination apparatus according to a third embodiment. Fig. 7A is a diagram showing an example of a template image of Fig. 6. Fig. 7B is a diagram showing an example of a background image of Fig. 6. Fig. 7C is a diagram showing an example of a learning image of Fig. 6. Fig. 7D is a diagram showing an example of a learning mask of Fig. 6.

In Fig. 6, a learning data set generation apparatus includes a template processing unit 6 and a template superposing unit 7. The template processing unit 6 uses a template image and a processing setting value as inputs, and outputs a processed template image. The template superposing unit 7 uses a processing setting value, a processed template image, and a background image as inputs, superposes the processed template image on the background image on the basis of the processing setting value, and outputs a learning image and a learning mask.

The template image is an image of a subject in a normal state. When a subject is a road sign as shown in, for example, Fig. 7A, the template image is an image of the road sign in a normal state. The processing setting value is a setting value used when the template processing unit 6 processes the template image. Processing items are prepared assuming the scene of facility inspection. For example, the template processing unit 6 processes a template image so as to have a variation in at least any one of brightness, contrast, chroma, hue, the presence or absence of a shade on a subject, the range of a shade, the angle of a subject in an image, a size, projective transformation, and blurring. Thus, the state determination apparatus is enabled to robustly perform a state determination with respect to a change in an outdoor sunshine condition, a change in a capturing direction, a change in the type of a camera in use, or the like. Note that the processing setting value may be automatically determined using a random number in a state in which only its upper limit value and lower limit value are set in advance, may be externally input using a command, a GUI (Graphical User Interface) or the like, or these methods may be used in combination.

The background image is an image serving as a background in which a subject can be provided. In order to increase the number of scenes capable of being addressed by the state determination apparatus, various scenes such as a sky image F7b01 and a tree image F7b02 in which a subject can be provided are captured and prepared in advance as background images as shown in, for example, Fig. 7B. The template superposing unit 7 may randomly select a background image from among a background image group using a random number and superpose a processed template image on the background image.

As the processing setting value inputted to the template superposing unit 7, a setting value relating to the position of a subject in an image is, for example, used. Like the processing setting value inputted to the template processing unit 6, the processing setting value may be automatically determined using a random number in a state in which only its upper limit value and lower limit value are set in advance, may be externally inputted using a command, a GUI, or the like, or these methods may be used in combination. The template superposing unit 7 may perform, besides superposing, processing to readjust the brightness or the like of a processed template image in accordance with a background image in order to reduce the artificiality of a learning image.

The learning image is a synthesized image in which a processed template image is superposed on a background image. For example, the template superposing unit 7 superposes a processed template image obtained by processing the template image of Fig. 7A on the sky image F7b01 and the tree image F7b02 of Fig. 7B to generate learning images F7c01 and F7c02 of Fig. 7C.

The learning mask is a mask for showing only a subject area in a learning image. The template superposing unit 7 generates the learning mask on the basis of deformation information and position information on a known subject in a template image. For example, the template superposing unit 7 generates learning masks F7d01 and F7d02 corresponding to the positions of the subjects in the learning images F7c01 and F7c02 of Fig. 7C, respectively. The learning image F7c01 and the learning mask F7d01 are a paired data set, and the learning image F7c02 and the learning mask F7d02 are a paired data set, each of which is simultaneously outputted from the template superposing unit 7.

Here, it is relatively easily to separately obtain the template image of Fig. 7A and the sky image F7b01 and the tree image F7b02 of Fig. 7B. Therefore, through the superposition of the processed template image of the template image of Fig. 7A on each of the sky image F7b01 and the tree image F7b02 of Fig. 7B, a large amount of learning data sets can be prepared even in a case in which it is difficult to directly capture subjects superposed on the backgrounds of the learning images F7c01 and F7c02 of Fig. 7C.

As described above, it is possible to perform the learning of the image reconfiguration unit and the mask generation unit and determine the state of a subject through the generation of learning data sets from a template image of the subject and a background image even in a case in which it is difficult to obtain a sufficient amount of captured images for learning in advance according to the above third embodiment.

Fig. 8 is a diagram showing an example of a GUI used to process a template image and superpose the processed template image on a background image of the state determination apparatus according to the third embodiment.

In Fig. 8, the GUI displays processing setting value lower limit slide bars F801, processing setting value upper limit slide bars F802, and preview slide bars F803 for respective processing items. Further, the GUI displays a template image file path, a background image ground directory path, a storage directory path, a preview screen F804, and an execution button F805.

A user selects a template image to be superposed on a background image through the specification of the template image file path. On the preview screen F804, a processed template image processed on the basis of the setting values of the preview slide bars F803 is displayed. The user presses the execution button F805 after setting the lower limit values and the upper limit values of the processing setting values of the respective processing items while confirming the preview screen F804. Then, processing setting values are randomly selected using random numbers in ranges between the lower limit values and the upper limit values of the processing setting values, and the template image is processed. After that, the processed template image is superposed on a randomly-selected background image, and a specified number of learning image groups and learning mask groups are generated and stored.

Fig. 9 is a diagram showing the configuration of the image reconfiguration unit during the learning of the state determination apparatus according to the third embodiment.

In Fig. 9, the learning unit of the image reconfiguration unit includes a reconfigured image evaluation unit 8. During the learning of the image reconfiguration unit 1, the learning image of Fig. 6 is inputted to the image reconfiguration unit 1, and a reconfigured image is outputted from the image reconfiguration unit 1. Further, the learning image and the reconfigured image are inputted to the reconfigured image evaluation unit 8, and a reconfigured image evaluation value is outputted from the reconfigured image evaluation unit 8 to the image reconfiguration unit 1.

Then, the reconfigured image evaluation unit 8 calculates the reconfigured image evaluation value on the basis of a difference between the learning image and the reconfigured image and feeds back the calculated reconfigured image evaluation value to the image reconfiguration unit 1 to advance the learning of the image reconfiguration unit 1 so that the difference becomes small.

Fig. 10 is a diagram showing the configuration of the mask generation unit during learning of the state determination apparatus according to the third embodiment.

In Fig. 10, the learning unit of the mask generation unit includes a generated mask evaluation unit 9. During the learning of the mask generation unit 2, the learning image of Fig. 6 is inputted to the mask generation unit 2, and a generated mask is outputted from the mask generation unit 2. Note that the reconfigured image outputted from the image reconfiguration unit 1 of Fig. 1 may be inputted to the mask generation unit 2 during the learning of the mask generation unit 2. Further, a learning mask and the generated mask are inputted to the generated mask evaluation unit 9, and a generated mask evaluation value is outputted from the generated mask evaluation unit 9 to the mask generation unit 2.

Then, the generated mask evaluation unit 9 calculates the generated mask evaluation value on the basis of a difference between the learning image and the generated mask and feeds back the calculated generated mask evaluation value to the mask generation unit 2 to advance the learning of the mask generation unit 2 so that the difference becomes small.

Fig. 11 is a block diagram showing a configuration example of the color determination unit of a state determination apparatus according to a fourth embodiment. Note that although the configuration of the color determination unit 3B of Fig. 5 is taken as an example in Fig. 11, the color determination unit 3A of Fig. 1 is also applicable.

In Fig. 11, the color determination unit 3B includes a pixel value difference evaluation unit 301, an adjustment unit 302, and a color determination result output unit 303. The pixel value difference evaluation unit 301 receives a generated mask, a captured image, and an adjusted image outputted from the adjustment unit 302. The adjustment unit 302 receives a reconfigured image and a pixel value difference evaluation value outputted from the pixel value difference evaluation unit 301.

The adjustment unit 302 performs global adjustment to bring a reconfigured image close to a captured image and outputs an adjusted image to the pixel value difference evaluation unit 301. The pixel value difference evaluation unit 301 calculates a pixel value difference evaluation value based on a difference between pixel values of the captured image and the adjusted image in a subject area shown by a generated mask, and feeds back the calculated pixel value difference evaluation value to the adjustment unit 302. The adjustment unit 302 performs global adjustment so that the difference between the pixel values of the captured image and the reconfigured image in the subject area becomes small. The color determination result output unit 303 outputs a color determination result on the basis of the pixel value difference evaluation value after the adjustment by the adjustment unit 302 is completed. The color determination result may be expressed by the two values of normality and abnormality obtained by applying a prescribed threshold to the pixel value difference evaluation value or a continuous value in which the pixel value difference evaluation value is used as it is.

For example, when a learning image generated from the template image of Fig. 6 is used for the learning of the image reconfiguration unit 1, there is a possibility that a captured image includes brightness or a color that cannot be covered by a learning image group. When such a captured image is inputted to the image reconfiguration unit 1, information that has not been recognized by the image reconfiguration unit 1 is compressed during the learning. As a result, a reconfigured image becomes an image in which the appearance of a subject is captured but brightness or a color is close to that of the learning image. When performing a comparison between pixel values of the captured image and the reconfigured image in this state, there is a possibility that the color determination unit 3B erroneously determines abnormality since a difference between the pixel values becomes large even in a normal state.

In view of this, the adjustment unit 302 reduces a difference in the brightness, color, or the like of a reconfigured image. Since the difference in the brightness, color, or the like is a global difference mainly relying on the performance of a camera, the adjustment unit 302 applies global adjustment to the reconfigured image. As a method for performing the adjustment, a method in which averages or variances of the pixel values in a subject area are made even between a captured image and a reconfigured image may be, for example, used.

Fig. 12 is a diagram showing an adjustment example of the adjustment unit of Fig. 11.

In Fig. 12, for example, when a captured image is significantly dark and the same degree of darkness cannot be covered in a learning image group, a reconfigured image cannot reproduce the same degree of darkness as that of the captured image and becomes an image brighter than the captured image. Therefore, the adjustment unit 302 of Fig. 11 performs adjustment to bring brightness in a subject area of the reconfigured image close to that of the captured image to obtain an adjusted image. Thus, the pixel value difference evaluation unit 301 is enabled to suitably perform a comparison between pixel values in the subject area.

Further, in the configurations of Figs. 1 and 5, the mask generation unit 2 is provided at a stage subsequent to the image reconfiguration unit 1. When the mask generation unit 2 is provided at a stage preceding the image reconfiguration unit 1, there is a possibility that the generation performance of the generated mask 2 reduces due to the influence of a difference in brightness, a color, or the like described above. Therefore, the generation performance of the generated mask 2 can be assured through the provision of the mask generation unit 2 at the stage subsequent to the image reconfiguration unit 1.

As described above, it is possible to reduce an erroneous determination due to a global difference in brightness, a color, or the like caused between a reconfigured image and a captured image and determine the state of a subject through a comparison between pixel values of the captured image and the reconfigured image after global adjustment to bring the reconfigured image close to the captured image according to the above fourth embodiment.

Fig. 13 is a block diagram showing the configuration of the shape determination unit of a state determination apparatus according to a fifth embodiment.

In Fig. 13, a shape determination unit 4 includes a mask difference evaluation unit 401, a projective transformation unit 402, and a shape determination result output unit 403. The mask difference evaluation unit 401 receives a generated mask and a projectively-transformed template mask outputted from the projective transformation unit 402. The projective transformation unit 402 receives a template mask and a mask difference evaluation value outputted from the mask difference evaluation unit 401.

The projective transformation unit 402 performs projective transformation on a template mask and outputs a projectively-transformed template mask to the mask difference evaluation unit 401. The mask difference evaluation unit 401 calculates a mask difference evaluation value based on similarity between a generated mask and the protectively-transformed template mask, and feeds back the calculated mask difference evaluation value to the projective transformation unit 402. The projective transformation unit 402 performs the projective transformation so that the similarity between the generated mask and the template mask becomes high. The shape determination result output unit 403 outputs a shape determination result on the basis of the mask difference evaluation value after the completion of the projective transformation. The shape determination result may be expressed by the two values of normality and abnormality obtained by applying a prescribed threshold to the mask difference evaluation value or a continuous value in which the mask difference evaluation value is used as it is.

Fig. 14 is a diagram showing a projective transformation example of the projective transformation unit of Fig. 13.

In Fig. 14, for example, when a direction in which a subject is provided is greatly different from a direction in which the subject is captured, similarity between a template mask and a generated mask becomes low even if the subject is normal. In view of this, the projective transformation unit 402 of Fig. 13 performs projective transformation on the template mask to simulate the direction in which the subject is captured that is greatly different from the direction in which the subject is provided to obtain a projectively-transformed template mask. Thus, the mask difference evaluation unit 401 is enabled to suitably evaluate the similarity between shapes.

As described above, it is possible to robustly perform a shape determination with respect to a variation in a direction in which a subject is provided and determine the state of the subject through a comparison between the shapes of a template mask and a generated mask after projective transformation to bring the template mask close to the generated mask according to the above fifth embodiment.

Fig. 15 is a block diagram showing the configuration of a state determination apparatus according to a sixth embodiment.

In Fig. 15, the state determination apparatus includes an image reconfiguration unit 1 and an integrated determination and proof presentation unit 10. The integrated determination and proof presentation unit 10 includes an integrated feature amount extraction unit 1001, an integrated feature amount evaluation unit 1002, a captured image inverse analysis unit 1003, and a template mask inverse analysis unit 1004.

The integrated feature amount extraction unit 1001 receives a captured image at facility inspection or the like, a reconfigured image, and a template mask, and extracts an integrated feature amount relating to the state of a subject. When the captured image is in a normal state, the integrated feature amount extraction unit 1001 can perform learning in advance so that an area occupied by an extracted feature amount group in a feature space falls within a prescribed variance range. For the learning of the integrated feature amount extraction unit 1001, only a learning data set relating to the subject may be used, or learning data sets relating to various objects other than the subject may be used additionally.

The integrated feature amount evaluation unit 1002 outputs an integrated determination result on the basis of an integrated feature amount extracted by the integrated feature amount extraction unit 1001. For example, the integrated feature amount evaluation unit 1002 determines normality when an integrated feature amount extracted by the integrated feature amount extraction unit 1001 falls within the range of a normal state in a feature space, and determines abnormality when the integrated feature amount deviates from the range. The integrated determination result may be expressed by the two values of normality and abnormality or a continuous value based on the integrated feature amount.

The captured image inverse analysis unit 1003 evaluates a degree to which a captured image contributes with respect to the deviation of an integrated feature amount, and outputs the result of the evaluation as color determination proof information.

The template mask inverse analysis unit 1004 evaluates a degree to which a template mask contributes with respect to the deviation of an integrated feature amount, and outputs the result of the evaluation as shape determination proof information used for an integrated determination.

An integrated feature amount falls within the range of a normal state in a feature space when a captured image, a reconfigured image, and a template mask are consistent with each other, but deviates from the range when the captured image, the reconfigured image and the template mask are inconsistent with each other. For example, when abnormality occurs in the color of a subject as shown in the second row of Fig. 2, the image reconfiguration unit 1 cannot suitably reconfigure an area in which the abnormality of the color occurs. Therefore, a captured image becomes inconsistent. Accordingly, the captured image inverse analysis unit 1003 is enabled to output color determination proof information used for an integrated determination through the evaluation of a degree to which a captured image contributes with respect to the deviation of an integrated feature amount. Particularly, a color determination with various resolution feelings is made possible in such a manner that the color determination is not performed on a pixel-by-pixel basis but is performed on the basis of feature amount levels.

Further, when abnormality occurs in the shape of a subject, a template mask becomes inconsistent. For example, when a part of a subject is lacked as shown in the third row of Fig. 2, the image reconfiguration unit 1 reconfigures the lack of the subject as it is. Therefore, a template mask in which the lack of the subject is not reflected becomes inconsistent. Accordingly, the template mask inverse analysis unit 1004 is enabled to output shape determination proof information used for an integrated determination through the evaluation of a degree to which a template mask contributes with respect to the deviation of an integrated feature amount. Particularly, a shape determination considering consistency with the color of a subject is made possible in such a manner that an image and a template mask are directly referred instead of using a generated mask.

As described above, proof information on a color or a shape used for an integrated determination can be outputted through the state determination of a subject based on an integrated feature amount extracted from a captured image, a reconfigured image, and a template mask and through the inverse analysis of the integrated feature amount according to the above sixth embodiment.

The above embodiments describe the cases in which the state determination apparatuses are applied to facility inspection systems used to inspect facilities such as road signs. However, the state determination apparatuses may be applied to other purposes . For example, the state determination apparatuses may be applied to facility inspection systems used to inspect facilities such as speed limitation signs for trains. Further, the state determination apparatuses may be applied to appearance inspection systems used to inspect the appearance of products in factory production lines. Further, the state determination apparatuses may be applied to baggage monitoring systems used to monitor the attached states of baggage management seals in physical distribution warehouses.

Note that the present invention is not limited to the above embodiments but includes various modified examples. For example, the above embodiments are given in detail for the purpose of facilitating the understanding of the present invention and are not necessarily needed to include all the configurations described. Further, it is also possible to replace a part of a configuration of one embodiment with a configuration of another embodiment or add a configuration of another embodiment to a configuration of one embodiment. Further, it is possible to perform the addition/deletion/replacement of another configuration with respect to a part of the configurations of the respective embodiments.

Further, a part or all of the above respective configurations may be configured by hardware, or may be configured to be realized when a program is performed by a processor. Further, control lines or information lines assumed to be necessary for the descriptions are shown, and all the control lines or information lines are not necessarily shown on products. Actually, it is assumable that almost all the configurations are connected to each other.

### [Reference Signs List]

- 1: Image reconfiguration unit
- 2: Mask generation unit
- 3A, 3B: Color determination unit
- 4: Shape determination unit
- 5: Integrated determination unit
- 6: Template processing unit
- 7: Template superposing unit
- 8: Reconfigured image evaluation unit
- 9: Generated mask evaluation unit
- 10: Integrated determination and proof presentation unit
- 301: Pixel value difference evaluation unit
- 302: Adjustment unit
- 303: Color determination result output unit
- 401: Mask difference evaluation unit
- 402: Projective transformation unit
- 403: Shape determination result output unit
- 1001: Integrated feature amount extraction unit
- 1002: Integrated feature evaluation unit
- 1003: Captured image inverse analysis unit
- 1004: Template mask inverse analysis unit

## Claims

1. A state determination apparatus comprising:
a mask generation unit; and
a shape determination unit, wherein
the mask generation unit is configured to generate a generated mask that separates a subject and a background included in an image, and
the shape determination unit is configured to determine a state of a shape of the subject on the basis of the generated mask generated by the mask generation unit and a template mask relating to a shape of the subject in a normal state.

2. The state determination apparatus according to claim 1, further comprising:
an image reconfiguration unit configured to reconfigure an image including the subject, wherein
the mask generation unit is configured to generate the generated mask that separates the subject and the background from a reconfigured image reconfigured by the image reconfiguration unit.

3. The state determination apparatus according to claim 2, wherein
the image reconfiguration unit is a learned model learned to reconfigure the image including the subject.

4. The state determination apparatus according to claim 3, further comprising:
a color determination unit; and
an integrated determination unit, wherein
the color determination unit is configured to determine a state of a color of the subject on the basis of a comparison result between pixel values of the image and the reconfigured image, and
the integrated determination unit is configured to output an integrated determination result obtained by integrating a result of the determination of the color and a result of the determination of the shape.

5. The state determination apparatus according to claim 4, wherein
the color determination unit is configured to determine the state of the color of the subject on the basis of the comparison result between the pixel values of the image and the reconfigured image about the subject separated from the background by the generated mask.

6. The state determination apparatus according to claim 4, further comprising:
a template processing unit; and
a template superposing unit, wherein
the template processing unit is configured to generate a processed template image obtained by processing a template image of the subject,
the template superposing unit is configured to generate a learning image and a learning mask that are paired with each other on the basis of a synthesized image obtained by superposing the processed template image on a background image in which a background where the subject is to be provided is captured, and
the image reconfiguration unit is configured to perform learning to output a reconfigured image obtained by reconfiguring the learning image on the basis of the learning image, and
the mask generation unit is configured to perform learning to output the generated mask on the basis of the learning mask and the learning image or the reconfigured image.

7. The state determination apparatus according to claim 6, wherein
the template processing unit is configured to perform processing on the template image of the subject so as to have a variation in at least any one of brightness, contrast, chroma, hue, a presence or absence of a shade on a subject, a range of a shade, an angle of a subject in an image, a size, projective transformation, and blurring.

8. The state determination apparatus according to claim 4, wherein
the color determination unit is configured to perform a comparison between the pixel values of the image and the reconfigured image after global adjustment to bring the reconfigured image close to the image.

9. The state determination apparatus according to claim 4, wherein
the shape determination unit is configured to perform a comparison between shapes of the generated mask and the template mask after projective transformation to bring the template mask close to the generated mask.

10. A state determination apparatus comprising:
a feature amount extraction unit configured to extract a feature amount relating to a state of a subject on the basis of an image including the subject and a template mask relating to a shape of the subject in a normal state; and
a state determination unit configured to determine the state of the subject on the basis of the feature amount extracted by the feature amount extraction unit.

11. The state determination apparatus according to claim 10, further comprising:
an image reconfiguration unit configured to reconfigure the image including the subject, wherein
the feature amount extraction unit is configured to extract a feature amount relating to the state of the subject on the basis of the image including the subject, the template mask, and a reconfigured image reconfigured by the image reconfiguration unit.

12. The state determination apparatus according to claim 11, wherein
the image reconfiguration unit is a learned model learned to reconfigure the image including the subject.

13. The state determination apparatus according to claim 11, further comprising:
a proof presentation unit configured to inversely analyze the feature amount and present proof information on a color or a shape used to determine the state of the subject.

14. A state determination method comprising:
generating a generated mask that separates a subject and a background included in an image; and
determining a state of a shape of the subject on the basis of the generated mask and a template mask relating to a shape of the subject in a normal state.

15. The state determination method according claim 14, wherein
a reconfigured image obtained by reconfiguring the image including the subject is generated,
a state of a color of the subject is determined on the basis of a comparison result between pixel values of the image and the reconfigured image, and
an integrated determination result obtained by integrating a result of the determination of the color and a result of the determination of the shape is outputted.
